# EUROPEAN PATENT APPLICATION

(11) **EP 1 294 151 A1**
(43) Date of publication of application: **19.03.2003**
(21) Application number: 01121636.3
(22) Date of filing: 12.09.2001
(51) Int. Cl.: H04L 25/06

(54) **DC offset correction for a direct-conversion receiver**

(71) Applicant: STMicroelectronics N.V., 1077 XX Amsterdam (NL)
(72) Inventor: Epifano, Fabio, 01210 Feaney-Voltaire (FR); Bonhomme, Corinne, 01630 Sergy (FR)
(74) Representative: Casalonga, Axel

(57) **Abstract**

The direct-conversion receiver comprises an analogic stage adapted to receive an incident signal from a transmission channel and including two processing pathes each having transposition means and programmable gain amplification means, and an analog-to-digital conversion stage connected to the analogic stage. It further comprises at least one compensation module (CMM) connected on each processing path (I, Q) between the input (BE) of the analog-to-digital stage and an entry point (SM) located between the programmable gain amplification means and the output of the transposition means, and having a first state for compensating a static DC offset of the analogic stage before receiving the incident signal, and a second state for compensating an eventual dynamic DC offset of the analogic stage during the reception of the incident signal.

## Description

The invention relates in general to the field of wireless communication systems, and more particularly to the GSM or DCS systems.

In a wireless communication system, a central base station communicates with a plurality of remote terminals, such as cellular mobile phones. Frequency-Division Multiple Access (FDMA) and Time-Division Multiple Access (TDMA) are the traditional multiple access schemes to provide simultaneous services to a number of terminals. The basic idea behind FDMA and TDMA technics is to slice the available resource into multiple frequency or time slots, respectively, so that multiple terminals can be accomodated without causing interference.

The cellular mobile phones operating according to the GSM standard belong to the FDMA and TDMA schemes because the emission and the reception use both different frequencies and different time domains.

Further, a GSM signal is a phase-modulated signal which has a constant envelope. In other words, the amplitude of the modulation is constant.

Contrasting these schemes with separate signals in frequency or time domains, Code-Division Multiple Access (CDMA) allows multiple users to share a common frequency and time channel by using coded modulation.

More precisely, as it is well-known by the man skilled in the art, a scrambling code which is a long pseudo noise code sequence, is associated with each base station and permits to distinguish the base stations from each other. Further, an orthogonal code, known by the man skilled in the art under the denomination of OVSF code, is allocated to each remote terminal (such as cellular mobile phone). All these OVSF codes are orthogonal with each other, which permits to distinguish a remote terminal from another.

By contrast with the communication schemes having constant-envelope modulation, the CDMA schemes use a modulated signal which has a non-constant envelope modulation. In other words, such a signal is phase and amplitude modulated and the amplitude of the modulation is not constant.

The invention relates in general to the communication scheme with constant-envelope modulation, like for example the GSM or DCS systems.

In a terminal of a wireless communication system, direct conversion is an alternative to superheterodyne architecture for a wireless receiver well suited for highly integrated solution for this terminal.

A direct-conversion or zero-IF receiver converts the band of interest directly to zero frequency and employs low-pass filtering to suppress nearby interferers.

While a zero-IF receiver is the most attractive RF architecture, not only because its allows to reach higher level of integration by reducing the number of external components, but for the re-configurability for multi-standard reception, such architecture presents unfortunately some drawbacks, such as a DC (direct current) offset and a second order distorsion.

Two different kinds of DC offsets must be considered, a time invariant or static DC offset and a time variant or dynamic DC offset.

The static DC offset is due to process mismatch while the time variant or dynamic DC offset comes mainly from non-linear characteristics and lower isolation between the ports of the mixers of the receiver.

More precisely, if the receiver has a second order nonlinearity, a constant envelope signal of an in-band blocker applied with the useful or desired signal, results in a DC offset at the output of the receiver. Further, if a modulated interferer is applied together with a desired signal, the second order distorsion of the receiver will cause a relevant DC step during the time slot.

The presence of the DC offset can pose two main problems i.e. the complete saturation of the following stages of the phone due to very high gain of the programmable gain amplifier, and the degradation of the bit error rate (BER).

The invention is intended to provide a solution to these problems.

One aim of the invention is to limit as short as possible the saturation and, at the same time, to reduce as much and fast as possible the eventual dynamic DC offset which can occurs during receiving a desired signal, in order to allow optimal performances of the digital receiver.

In other words, one aim of the invention is the compensation of both static and dynamic DC offsets.

As claimed, the invention proposes a direct-conversion receiver for a communication scheme with constant-envelope modulation, comprising an analogic stage adapted to receive an incident signal from a transmission channel and including two processing pathes, each having transposition means and programmable gain amplification means, and an analog-to-digital conversion stage connected to the analogic stage.

According to a general feature of the invention, the receiver further comprises at least one compensation module connected on each processing path between the input of the analog-to-digital stage and an entry point located between the programmable gain amplification means and the output of the transposition means, and having a first state for compensating a static DC offset of the analogic stage before receiving the incident signal, and a second state for compensating an eventual dynamic DC offset of the analogic stage during the reception of the incident signal.

In other words, according to the invention, the compensation is performed in two phases by a same means: before receiving the incident signal, the compensation module will cancell the static DC offset. Then, during the signal reception, the compensation module will compensate for an eventual dynamic DC offset.

According to an embodiment of the invention, the compensation module comprises
- a smoothing capacitor connected to said entry point through an adder,
- threshold control means for defining the values of two opposite thresholds depending on the state of the compensation module,
- main comparison means for comparing the voltage present at the input of the analog-to-digital stage with said two opposite thresholds, and
- main control means for charging or discharging said smoothing capacitor if the voltage present at the input of the analog-to-digital stage is greater than the positive threshold or lower than negative threshold during a duration equal or greater than a predetermined duration, for example around 5µsec.

The main control means may for example comprise:
- an intermediate control module for charging or discharging intermediate capacitor means depending on the result of the comparison performing by said main comparison means,
- an auxiliary comparison module for comparing the current voltage accross said intermediate capacitor means with a reference voltage corresponding to a voltage across said intermediate capacitor means obtained after having charged said intermediate capacitor means continuously during said predetermined duration, and
- a final control module for charging or discharging said smoothing capacitor if the current voltage across said intermediate capacitor means is greater than the reference voltage.

According to an embodiment of the invention, said main comparison means comprises a first comparator having its positive input receiving the negative threshold and a second comparator having its negative input receiving the positive threshold;
the intermediate capacitor means comprise a first and a second identical intermediate capacitors each having a first terminal connected to the ground and a second terminal;
said intermediate control module comprises:
- a first and a second resistors each having a first terminal connected to the ground and a second terminal,
- a first and a second intermediate current sources,
- a first switching means controlled by the output of the first comparator for selectively connecting the second terminal of the first intermediate capacitor to the first intermediate current source or to the second terminal of the first resistor,
- a second switching means controlled by the output of the second comparator for selectively connecting the second terminal of the second intermediate capacitor to the second intermediate current source or to the second terminal of the second resistor;
the auxiliary comparison module comprises:
- a first auxilary comparator having one input connected to the second terminal of the first intermediate capacitor, and another input connected to the reference voltage,
- a second auxilary comparator having one input connected to the second terminal of the second intermediate capacitor, and another input connected to the reference voltage;
the final control module comprises:
- a first final current source adapted to charge the smoothing capacitor and a second final current source adapted to discharge the smoothing capacitor,
- first final switching means controlled by the output of the first auxiliary comparator, and connected between the smoothing capacitor and the first final current source, and
- second final switching means controlled by the output of the second auxiliary comparator, and connected between the smoothing capacitor and the second final current source.

The values of the two thresholds depend on the state of the compensation module. More precisely, for example, in the first state, the threshold control means are adapted to set the value of the positive threshold equal to the absolute value of the maximum acceptable static DC offset, and are further adapted to set the gain of the programmable amplification means at the maximum level, and in the second state, the threshold control means are adapted to set the values of the thresholds at a pourcentage of the RMS value of the signal present at the input of analog-to-digital stage.

Generally speaking,the transmission channel carries repetitive frames, each of which being subdivided into a number of time-slots, at least one time-slot being allocated to the receiver in each frame. The compensation modules are in their first state for example during at least a part of a time-slot preceeding said allocated time-slot.

Further, according to one embodiment of the invention, the compensation modules are in their second state during said allocated time-slot, and during said allocated time-slot, said threshold control means determine said thresholds from the power information of the signal received during the allocated time-slot of the preceeding frame.

According to a preferred embodiment of the invention, the receiver comprises two compensation modules respectively connected on the two processing pathes between the corresponding input of the analog-to-digital stage and the corresponding entry point.

The invention proposes also a mobile terminal, such as a cellular mobile phone, comprising a receiver as defined above.

Other advantages and features of the invention will appear on examining the detailed description of embodiments, these being in no way limiting and of the appended drawings in which:
- Figure 1 illustrates very diagrammatically a cellular mobile phone according to the invention incorporating a receiver according to the invention,
- Figure 2 illustrates more in details but still very diagrammatically the main means of a compensation module according to the invention,
- Figure 3 illustrates still diagrammatically the compensation instants according to the invention, and
- Figure 4 illustrates a voltage-time curve corresponding to a predetermined duration.

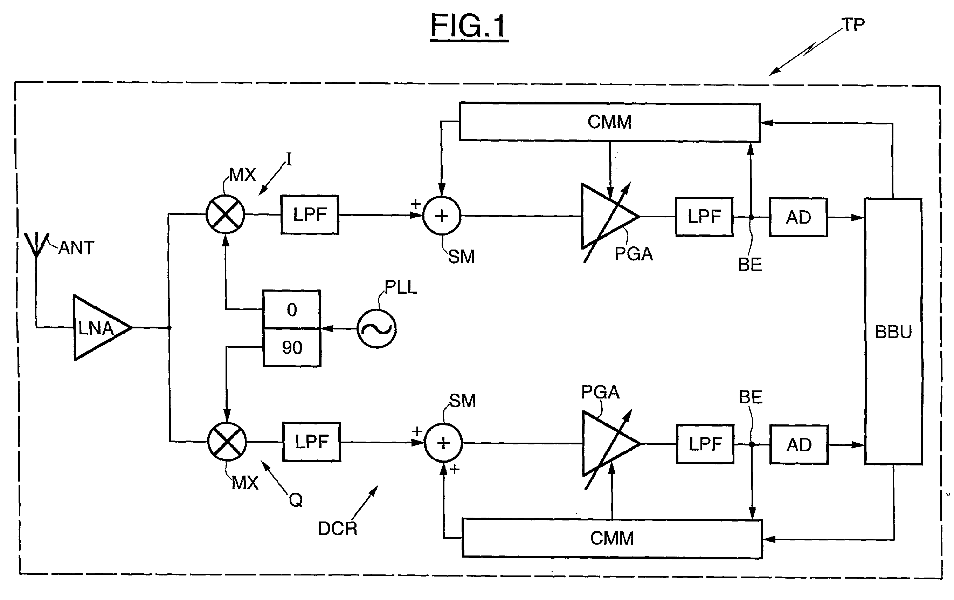

In figure 1, the reference TP denotes a remote terminal such as a cellular mobile phone which is in communication with a base station. The mobile phone TP comprises a direct-conversion receiver DCR connected to an antenna ANT for receiving an incident signal.

The direct-conversion receiver comprises an analogic stage connected to a digital stage or base band unit, BBU, through analog-to-digital converters AD.

Conventially, the analogic stage comprises a low-noise amplifier LNA and two processing pathes including mixers MX, conventional low path filters LPF and programmable gain amplification means PGA.

The two mixers MX receive respectively from a phase locked loop PLL two signals, having mutually phase difference of 90°. After frequency transposition in the mixers, the two processing pathes define respectively two streams I and Q as it is well known by the man skilled in the art. Because the receiver is a direct-conversion receiver, the receive signal is transposed in base band and then filtered and amplified at base band.

After digital conversion into the converters AD, the two digital streams I and Q are delivered to the base band unit BBU.

This base band unit is well known by the man skilled in the art and comprises especially estimation channel means, demodulation means as well as source decoding means. Further, as it is also well known by the man skilled in the art, the gain of the programmable gain amplification means BGA is controlled by the base band unit.

According to the invention, the direct-conversion receiver further comprises two compensation modules CMM. These compensation modules will compensate as it will be explained more in details thereafter, a static DC offset as well as an inventual dynamic DC offset.

As illustrated on figure 1, one compensation module is connected on the I processing path whereas the second compensation module is connected on the Q processing path.

More precisely, each compensation module is connected between the input BE of the analog-to-digital converters AD and one input of an adder SM, located on the processing path between the programmable gain amplification means PGA and the output of the mixer MX. On figure 1, the adder SM is located after the low path filter LPF but it could be also located between the mixer MX and the low path filter LPF.

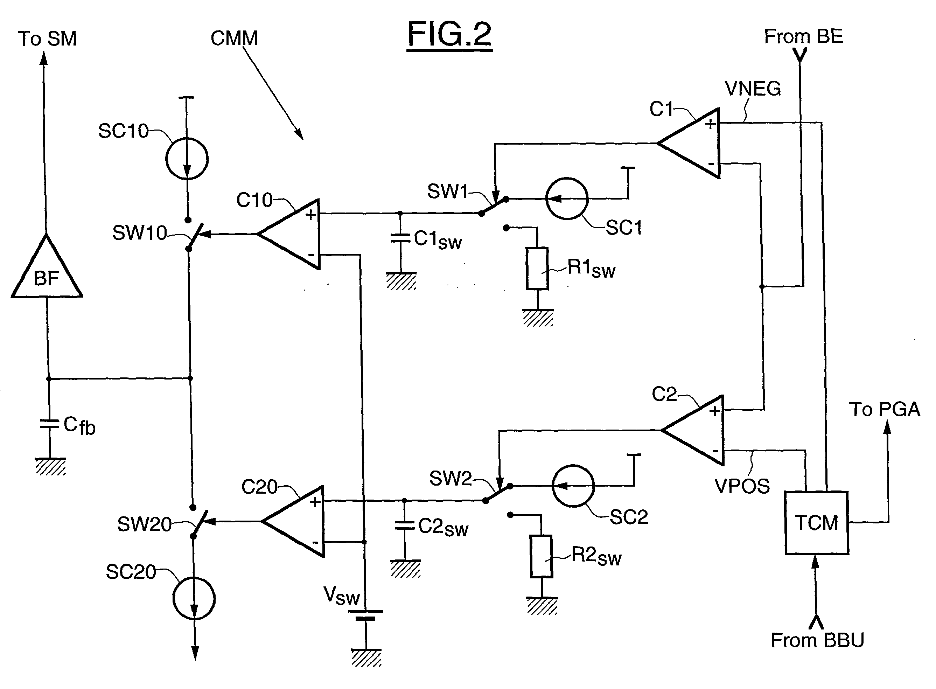

One compensation module CMM will be now described more in details with reference in particular to figure 2.

More precisely, the compensation module CMM comprises a capacitor C_{fb}, called « smoothing capacitor » connected to said entry point through the adder SM.

The compensation module comprises threshold control means TCM for defining the values of two opposite thresholds VNEG and VPOS. In other words, VNEG is equal to -VPOS.

A first comparator C1 receives the threshold VNEG on its positive input and the signal present at point BE on its negative input.

A second comparator C2 receives the signal present at point BE on its positive input and receives the threshold VPOS on its negative input.

This two comparators C1 and C2 form main comparison means and are adapted to compare the voltage present at point BE with said two opposite threshold VNEG and VPOS.

The compensation module CMM comprises also intermediate capacitor means comprising a first intermediate capacitor C1_{sw} and a second intermediate capacitor C2_{sw}. The first and second intermediate capacitors are identical, each having a first terminal connected to the ground, and a second terminal.

The compensation module comprises also an intermediate control module for charging or discharging intermediate capacitor means C1_{sw}, C2_{sw}, depending on the result of the comparison performing by the comparators C1 and C2.

More precisely, the intermediate control module comprises a first resistor R1_{sw} and a second resistor R2_{sw}. Each resistor has a first terminal connected to the ground, and a second terminal.

The intermediate control module comprises also a first intermediate current source SC1 and a second intermediate current source SC2.

The intermediate control module further comprises a first switching means SW1 controlled by the ouptut of the first comparator C1 for selectively connecting the second terminal of the first intermediate capacitor C1_{sw} to the first intermediate current source SC1 or to the second terminal of the first resistor R1_{sw}.

By analogy, the intermediate control module comprises also a second switching means SW2 controlled by the output of the second comparator C2 for selectively connecting the second terminal of the second intermediate capacitor C2_{sw} to the second intermediate current source SC2 or to the second terminal of the second resistor R2_{sw}.

The compensation module comprises also an auxiliary comparison module formed by a first auxiliary comparator C10 and a second auxiliary comparator C20.

The first auxiliary comparator C10 has one input connected to the second terminal of the first intermediate capacitor S1_{sw} and another input (here the negative input) connected to a reference voltage V_{sw}.

The second auxiliary comparator C20 has its positive input connected to the second terminal of the second intermediate capacitor C2_{sw}, and its negative input receiving the reference voltage V_{sw}.

At last, the compensation module comprises a final control module including a first final current source SC10 adapted to charge the smoothing capacitor C_{fb} and a second final current source SC20 adapted to discharge the smoothing capacitor C_{fb}.

This final control module further comprises first final switching means SW10 controlled by the ouptut of the first auxiliary comparator C10, and connected between the smoothing capacitor and the first final current source SC10.

The final control module comprises also a second final switching means SW20 controlled by the output of this second auxiliary comparator C20 and connected between the smoothing capacitor C_{fb} and the second final current source SC20.

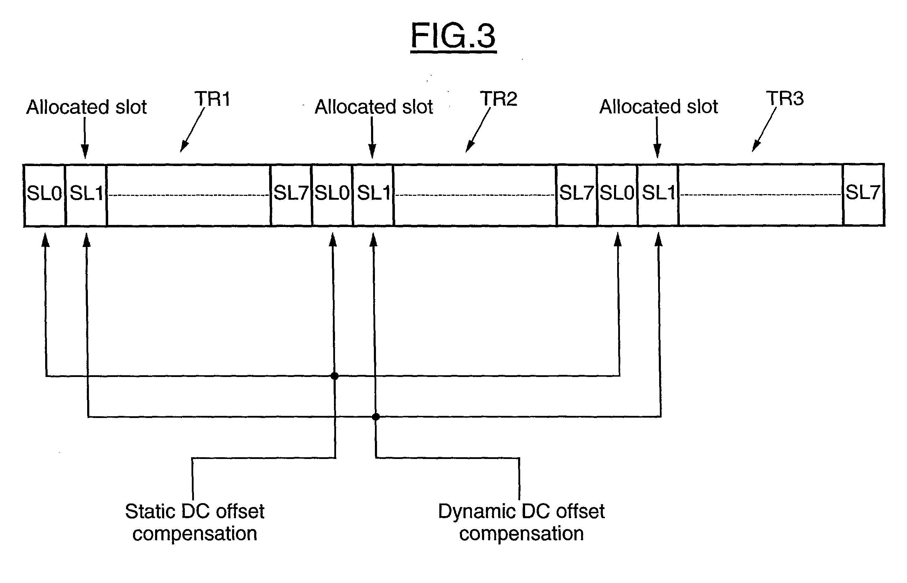

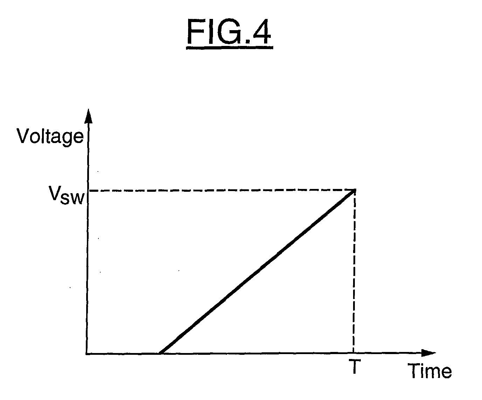

The operation of the compensation module will be now described in details with reference also on figures 3 and 4.

As illustrated on figure 3, in a communication system such as the GSM system, the transmission channel is timely subdivided into frames TRi (only three frames are represented on figure 3). Each frame comprises several times slot, for example 8 time slots.

Generally speaking, the transmission of the information between the base station and the phone is carried on the successive frames within one or more consecutive time-slots in each frame. In other words, one or more consecutive time-slots is allocated to the phone within each frame. Here, it is assumed that only one time slot has been allocated in each frame, for example time slot SL1.

According to the invention, the compensation of the offset is performed in two phases. And the compensation module is adapted to have two states corresponding to these two phases.

More precisely, the compensation module is in its first state during a part of time slot SL0 preceding the allocated time slot SL1 and will cancell the static DC offset.

Then, during the signal reception, i.e. during the allocated slot SL1, the compensation module is in its second state and will compensate an eventual dynamic DC offset.

When the compensation module is in its first state, the threshold control means TCM set the value of the positive threshold equal to the absolute value of the maximum acceptable static DC offset, for example 10 mvolts. The negative threshold VNEG is set to the opposite value, i.e. - 10 mvolts.

Further, the gain of the programmable amplification means PGA is set at its maximum level either directly by the base band unit or by the threshold control means according to an information given by the base band unit.

The amplified DC offset present at poing BE is compared with the two threshold, VPOS and VNEG, and, if it is out of the range (VPOS, VNEG), then one of the two comparators C1 and C2 will force the charge of one of the intermediate capacitors C1_{sw}, C2_{sw} in order to close the switch SW10 for positive DC offset or the switch SW20 for negative DC offset, and to charge or discharge the smoothing capacitor C_{fb}. The voltage across the smoothing capacitor is then added through the buffer BF to the signal present at the other input of the adder SM.

More precisely, for example, if the absolute value of the amplified DC offset at point BE is lower than VPOS, the switches SW1 and SW2 allow to connect the intermediate capacitors C1_{sw} and C2_{sw} with the resistors R1_{sw} and R2_{sw}. Thus, these intermediate capacitors C1_{sw} and C2_{sw} are discharged. And the voltage at the second terminal of each intermediate capacitor is lower than the reference voltage V_{sw}. Consequently, the switches SW10 and SW20 are opened an the compensation module has no effect.

If for example, the DC offset is positive and greater than VPOS, the switch SW2 connects intermediate capacitor C2 with the intermediate current source SC2, thereby allowing the charge of capacitor C2_{sw}. When the voltage across this capacitor C2_{sw} becomes greater than the reference voltage, the switch SW20 is closed allowing the discharge of the smoothing capacitor. Consequently, a negative voltage is added by the adder to the signal present in the processing path.

In its second state, i.e. during the allocated time slot, the two threshold VPOS and VNEG are propertly set by the threshold control means TCM according to the information coming from the base band unit. In fact, VPOS and VNEG are directly related to the information controlling the gain of the PGA. More precisely, the threshold control means are adapted to set the values of the threshold at a percentage of the RMS value of the signal present at the input of analog-to-digital stages. And, in this regard, the threshold control means TCM use the power information of the signal received during the allocated time-slot of the preceding frame, in order to obtain the RMS value of the signal. And this RMS value obtained from a power information occuring during the preceeding allocated time-slot, is used during the current allocated time-slot. For example, the values of the threshold are chosen such that the DC offset is always lower than 35% of the RMS value of the received signal which fits the bare requirements of the GSM-DCS standard.

The operation of the compensation module in the second state is analoguous to that in the first state. However, as illustrated on figure 4, each intermediate capacitor C1_{sw} or C2_{sw} needs a predetermined duration T chosen for example around 5µs, in order to have a voltage across said intermediate capacitor equal to the reference voltage V_{sw}.

In other words, through these intermediate capacitors C1_{sw} and C2_{sw}, a time measure is done. If the signal present a point BE is above VPOS or below VNEG longer than the predetermined duration T set by V_{sw}, the smoothing capacitor will be quickly charged (discharged) in order to compensate the DC offset by substracting or adding a DC voltage compensation to the input signal.

But, if the output signal is above VPOS or below VNEG shorter than the reference duration T, for example due to noise, there is no compensation of offset.

Further, if the monitored signal does not exceed the range VPOS, VNEG, the stored charge of the smoothing capacitor C_{fb} remains at least until the end of the allocated slot. So, in that case, no other compensation is required as the offset is lower than the threshold.

While the above description contains certain specifications, this should not construed as limitations on the scope of the invention but rather an exemplification of one preferred embodiment and application thereof. It will be apparent to those skilled in the art that various modifications can be made to the invention without departing from the scope or spirit of the invention and it is intended that the present invention covers modifications and variations of the direct-conversion receiver provided they come in the scope of the appended claims and their equivalence.

For example, it could be possible to use only one compensation module and to connect its outpout to both adders SM.

Further the sign of the input of the adder SM receiving the offset compensation provided by the compensation module may be negative depending on which inputs of comparators C1 and C2 are connected to the point BE. In other words, the adder SM could be a substractor.

## Claims

1. A direct-conversion receiver for a communication scheme with constant-envelope modulation, comprising an analogic stage adapted to receive an incident signal from a transmission channel and including two processing pathes each having transposition means and programmable gain amplification means, and an analog-to-digital conversion stage connected to the analogic stage, **characterized by** the fact that it further comprises at least one compensation module (CMM) connected on each processing path (I, Q) between the input (BE) of the analog-to-digital stage and an entry point (SM) located between the programmable gain amplification means and the output of the transposition means, and having a first state for compensating a static DC offset of the analogic stage before receiving the incident signal, and a second state for compensating an eventual dynamic DC offset of the analogic stage during the reception of the incident signal.

2. A receiver according to claim 1, **characterized by** the fact that the compensation module comprises:
- a smoothing capacitor (C_{fb}) connected to said entry point through an adder,
- threshold control means (TCM) for defining the values of two opposite thresholds depending on the state of the compensation module,
- main comparison means (C1,C2) for comparing the voltage present at the input of the analog-to-digital stage with said two opposite thresholds, and
- main control means for charging or discharging said smoothing capacitor if the voltage present at the input of the analog-to-digital stage is greater than the positive threshold or lower than negative threshold during a duration equal or greater than a predetermined duration (T).

3. A receiver according to claim 2, **characterized by** the fact that said main control means comprises:
- an intermediate control module for charging or discharging intermediate capacitor means (C1_{sw}, C2_{sw} )depending on the result of the comparison performing by said main comparison means,
- an auxiliary comparison module for comparing the current voltage accross said intermediate capacitor means with a reference voltage (V_{sw}) corresponding to a voltage across said intermediate capacitor means obtained after having charged said intermediate capacitor means continuously during said predetermined duration, and
- a final control module for charging or discharging said smoothing capacitor if the current voltage across said intermediate capacitor means is greater than the reference voltage.

4. A receiver according to claim 3, **characterized by** the fact that said main comparison means comprises a first comparator (C1) having its positive input receiving the negative threshold and a second comparator (C2) having its negative input receiving the positive threshold,
by the fact that the intermediate capacitor means comprise a first and a second identical intermediate capacitors (C1_{sw}, C2_{sw}) each having a first terminal connected to the ground and a second terminal,
by the fact that said intermediate control module comprises:
- a first and a second resistors (R1_{sw}, R2_{sw}) each having a first terminal connected to the ground and a second terminal,
- a first and a second intermediate current sources (SC1, SC2),
- a first switching means (SW1) controlled by the output of the first comparator for selectively connecting the second terminal of the first intermediate capacitor to the first intermediate current source or to the second terminal of the first resistor,
- a second switching means (SW2) controlled by the output of the second comparator for selectively connecting the second terminal of the second intermediate capacitor to the second intermediate current source or to the second terminal of the second resistor,
by the fact that the auxiliary comparison module comprises:
- a first auxilary comparator (C10) having one input connected to the second terminal of the first intermediate capacitor, and another input connected to the reference voltage,
- a second auxilary comparator (C20) having one input connected to the second terminal of the second intermediate capacitor, and another input connected to the reference voltage,
by the fact that the final control module comprises:
- a first final current source (SC10) adapted to charge the smoothing capacitor and a second final current source (SC20) adapted to discharge the smoothing capacitor,
- first final switching means (SW10) controlled by the output of the first auxiliary comparator, and connected between the smoothing capacitor and the first final current source, and
- second final switching means (SW20) controlled by the output of the second auxiliary comparator, and connected between the smoothing capacitor and the second final current source.

5. A receiver according to any one of claims 2 to 4, **characterized by** the fact that in the first state, the threshold control means (TCM) are adapted to set the value of the positive threshold equal to the absolute value of the maximum acceptable static DC offset, and are further adapted to set the gain of the programmable amplification means at the maximum level, and by the fact that in the second state, the threshold control means are adapted to set the values of the thresholds at a pourcentage of the RMS value of the signal present at the input of analog-to-digital stage.

6. A receiver according to claim 5, **characterized by** the fact that the transmission channel carries repetitive frames, each of which being subdivided into a number of time-slots, at least one time-slot (SL1) being allocated to the receiver in each frame, by the fact that the compensation modules are in their first state during at least a part of a time-slot (SL0) preceeding said allocated time-slot, and by the fact that the compensation modules are in their second state during said allocated time-slot (SL1), and by the fact that during said allocated time-slot, said threshold control means determine said threshold from the power of the signal received during the allocated time-slot of the preceeding frame.

7. A receiver according to any one of the preceeding claims, **characterized by** the fact that it comprises two compensation modules (CMM) respectively connected on the two processing path between the corresponding input of the analog-to-digital stage and the corresponding entry point.

8. A mobile terminal, **characterized by** the fact that it comprises a received according to any one of claims 1 to 7.

9. A mobile terminal according to claim 8, **characterized by** the fact it constitutes a cellular mobile phone.

10. A method of processing an incident signal within a direct-conversion receiver for a communication scheme with constant-envelope modulation, comprising an analogic stage adapted to receive said incident signal from a transmission channel and including two processing pathes each having transposition means and programmable gain amplification means, and an analog-to-digital conversion stage connected to the analogic stage, **characterized by** the fact that it comprises
a first compensation step occuring before receiving the incident signal and comprising providing a first compensation signal from the voltage present at the input (BE) of the analog-to-digital stage and delivering said first compensation signal at an entry point (SM) located between the programmable gain amplification means and the output of the transposition means, for compensating a static DC offset of the analogic stage, and
a second compensation step occuring while receiving the incident signal and comprising providing a second compensation signal from the signal present at the input (BE) of the analog-to-digital stage and delivering said second compensation signal at said entry point (SM), for compensating an eventual dynamic DC offset of the analogic stage during the reception of the incident signal.
